(19) Europäisches Patentamt
European Patent Office
Office européen des brevets

(11) Numéro de publication: **0 180 513**
**B1**

(12) # FASCICULE DE BREVET EUROPEEN

(45) Date de publication du fascicule du brevet: **01.06.88**

(51) Int. Cl.⁴: **B 01 J 37/04**, C 10 G 47/18, B 01 J 29/08

(21) Numéro de dépôt: **85402043.5**

(22) Date de dépôt: **22.10.85**

(54) **Catalyseur d'hydrocraquage destiné à la production de distillats moyens contenant comme constituants de base une zéolithe Y stabilisée et une argile pontée.**

(30) Priorité: **24.10.84 FR 8416256**

(43) Date de publication de la demande: **07.05.86 Bulletin 86/19**

(45) Mention de la délivrance du brevet: **01.06.88 Bulletin 88/22**

(84) Etats contractants désignés: **DE GB IT NL**

(56) Documents cités:
**GB - A - 2 044 627**
**US - A - 3 617 491**
**US - A - 4 036 739**
**US - A - 4 079 019**
**US - A - 4 111 846**
**US - A - 4 138 326**

(73) Titulaire: **INSTITUT FRANCAIS DU PETROLE, 4, Avenue de Bois-Préau, F-92502 Rueil-Malmaison (FR)**

(72) Inventeur: **Marcilly, Christian, 91 ter rue Condorcet, F-78800 Houilles (FR)**
Inventeur: **Dufresne, Pierre, 67, rue Georges Sand, F-92500 Rueil-Malmaison (FR)**

**EP 0 180 513 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un catalyseur d'hydrocraquage de fractions pétrolières lourdes en essence et surtout distillats moyens, kérosène et gazole, comprenant comme constituants de base une zéolithe Y stabilisée et une argile pontée.

Plus précisément, ce catalyseur comprend un mélange d'une zéolithe acide de type Y stabilisée, d'une argile pontée appartenant au groupe des smectites (groupe de la montmorillonite), d'une matrice amorphe contenant de l'alumine, et d'un composant d'hydro-déshydrogénation comprenant au moins un métal du groupe VIII et éventuellement au moins un métal du groupe VIB de la classification périodique des éléments (Handbook of Chemistry and Physics 37ème édition, 1955-56, pages 192-193).

L'hydrocraquage de coupes pétrolières lordes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'interêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2 \cdot g^{-1}$ environ) présentant une acidité superficielle, tels que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VIB de la classification périodique, (molybdène et tungstène notamment), et VIII de la même classification, (cobalt et nickel notamment), deux au moins des métaux de cette association appartenant à deux groupes différents (VIB et VIII précédemment cités).

L'équilibre entre les deux fonctions acide de hydrogénante est le paramètre fondamental qui régit l'activité et la sélectivité du catalyseur. Une fonction acide faible et une fonction hydrogénante forte donnent des catalyseurs peu actifs, travaillant à température en géneral élevée (⩾ 390°C environ), et à vitesse spatiale d'alimentation faible (la VVH exprimée en volume de charge traitée par unité de volume de catalyseur et par heure est généralement inférieure à 2), mais dotés d'une très bonne sélectivité en distillats moyens. Inversement, une fonction acide forte et une fonction hydrogénante faible donnent des catalyseurs très actifs mais présentant une mauvaise sélectivité en distillats moyens.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, ou encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5% poids, à une association des sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les zéolithes acides présentent l'avantage par rapport aux autres supports acides précédemment cités, d'apporter une acidité beaucoup plus élevée. Les catalyseurs qui les contiennent sont donc beaucoup plus actifs et pour cette raison, permettent de travailler à température plus basse et/ou à vitesse spatiale d'alimentation (VVH) plus élevée. En revanche, cette acidité plus élevée modifie l'équilibre entre les deux fonctions catalytiques, acide et hydrogénante. Il en résulte une modification de sélectivité notable de ces catalyseurs par rapport aux catalyseurs conventionnels: ils sont plus craquants et produisent par conséquent beaucoup plus d'essence que de distillats moyens.

Par ailleurs, les zéolithes acides présentent l'inconvénient de transformer difficilement les molécules de taille supérieure à une dizaine d'Angströms, qui ne peuvent pénétrer dans leur microporosité de structure. Ces molécules ne peuvent donc se transformer que sur les sites acides de la matrice amorphe et sur ceux peu nombreux présents sur la surface externe des cristallites de la zéolithe.

La présente invention concerne un nouveau type de catalyseur zéolithique, renfermant une zéolithe dont les caractéristiques physiques et l'acidité ont été spécialement modifiées, une argile du groupe des smectites (groupe de la montomorillonite) spécialement modifiée par l'intercalation de cales d'oxydes, de préférence d'oxydes métalliques, entre les feuilles, une matrice amorphe à base d'alumine, et une fonction hydrogénante qui sera définie plus loin. Ce nouveau type de catalyseur présente une activité et une sélectivité en distillats moyens notablement améliorées par rapport aux autres systèmes de l'art antérieur à base de zéolithes.

La zéolithe utilisée dans le catalyseur (1 à 70% en poids, de préférence 3 à 50%) de la présente invention est une zéolithe acide HY caractérisée par différentes spécifications, dont les méthodes de détermination seront précisées dans la suite du texte: un rapport molaire $SiO_2/Al_2O_3$ de 8 à 70 et de manière préférée de 12 à 40; une teneur en sodium inférieure à 0,15% poids déterminée sur la zéolithe calcinée à 1100°C; un paramètre cristallin $a_o$ de la maille élé-

mentaire compris entre 24,55 × $10^{-10}$ m et 24,24 × $10^{-10}$ m et de manière préférée entre 24,38 × $10^{-10}$ m et 24,26 × $10^{-10}$ m; une capacité $C_{Na}$ de reprise en ions sodium, exprimée en gramme de Na par 100 grammes de zéolithe modifiée, neutralisée puis calcinée, supérieure à environ 0,85 (la capacité $C_{Na}$ de reprise en ions sodium sera définie de manière plus précise au paragraphe suivant); une surface spécifique déterminée par la méthode B.E.T. supérieure à 400 $m^2 \cdot g^{-1}$ et de préférence supérieure à 550 $m^2 \cdot g^{-1}$; une capacité d'adsorption de vapeur d'eau à 25°C pour une pression partielle de 2,5 torrs (346,6 Pa) ($P/P_o$ = 0,10), supérieure à 6% poids. Une répartition microporeuse, déterminée par la méthode décrite par BARRETT, JOYNER et HALENDA dans Journal of American Chemical Society, volume 73, page 373, (1951), de type bimodale comprenant en plus de la classique porosité de structure centrée autour d'un diamètre de 0,8-0,9 nanomètre (nm), une microporosité secondaire se répartissant de manière plus large autour d'une valeur moyenne comprise entre 2,0 et 8,0 nm et de manière préférée entre 2,0 et 6,0 nm, ladite microporosité secondaire représentant 1 à 20% du volume poreux de la zéolithe, tel qu'il est défini plus loin.

Les différentes caractéristiques sont mesurées par les méthodes précisées ci-après:

– le rapport molaire $SiO_2/Al_2O_3$ est mesuré par analyse chimique. Quand les quantités d'aluminium deviennent faibles, par exemple inférieures à 2%, pour plus de précision, il est opportun d'utiliser une méthode de dosage par spectrométrie d'adsorption atomique.

– le paramètre demaille est calculé à partir du diagramme de diffraction des rayons X, selon la méthode décrite dans la fiche ASTM D 3942-80. Il est clair que pour effectuer ce calcul correctement, il faut que la cristallinité du produit soit suffisante.

– la surface spécifique est déterminée à partir de l'isotherme d'adsorption d'azote à la température de l'azote liquide et calculé selon la méthode classique B.E.T. Les échantillons sont prétraités, avant la mesure, à 500°C sous balayage d'azote sec.

– les pourcentages de reprise en eau (ou capacité d'adsorption de vapeur d'eau) sont déterminés à l'aide d'un appareillage classique de gravimétrie. L'échantillon est prétraité à 400°C sous vide primaire puis porté à une température stable de 25°C. On admet ensuite une pression d'eau de 2,6 torrs (346,6 Pa), ce qui correspond à un rapport P/Po d'environ 0,10 (rapport entre la pression partielle d'eau admise dans l'appareil et la pression de vapeur saturante de l'eau à la température de 25°C).

– la capacité d'échange des ions sodium $C_{Na}$ (ou capacité de reprise en ions sodium) est déterminée de la manière suivante: un gramme de zéolithe est soumis à trois échanges successifs dans 100 $cm^3$ de solution 0,2 M de NaCl, pendant une heure à 20°C sous bonne agitation. Les solutions sont laissées à pH naturel pendant l'échange. En effet si le pH était réajusté à des valeurs proches de 7, par addition de petites quantités de soude, les taux de sodium échangé seraient supérieurs. Elle est exprimée en gramme de sodium pour 100 g de zéolithe modifiée, rééchangée puis calcinée à 1100°C.

– la distribution microporeuse est déterminée par la méthode B.J.H. (BARRETT, JOYNER, HALENDA, J. A. C. S. déjà cité) basée sur l'exploitation numérique de l'isotherme de désorption d'azote. La mesure est effectuée avec un appareil CARLO ERBA type SORPTOMATIC série 1800. Le volume poreux total de la zéolithe est défini ici comme le volume d'azote adsorbé (sur l'isotherme de désorption) à une pression d'azote correspondant à P/Po = 0,99.

Ces zéolithes dont on a démontré qu'elles présentaient une activité et une sélectivité remarqualbles vis-à-vis de la production de distillats moyens par hydrocraquage, sont fabriquées, généralement à partir d'une zéolithe NaY par une combinaison appropriée de deux traitements de base:

(a) un traitement hydrothermique qui associe température et pression partielle de vapeur d'eau, et
(b) un traitement acide par, de préférence, un acide minéral fort et concentré.

Généralement la zéolithe NaY à partir de laquelle on prépare la zéolithe selon l'invention possède un rapport molaire $SiO_2/Al_2O_3$ compris entre environ 4 et 6; il conviendra au préalable d'en abaisser la teneur en sodium (poids) à une valeur inférieure à 3% et de préférence à 2,8%; la zéolithe NaY possède en outre généralement une surface spécifique comprise entre 750 et 950 $m^2/g$ environ.

Plusieurs variantes de préparation existent qui toutes font suivre le traitement hydrothermique de la zéolithe par un traitement acide. Les traitements hydrothermiques sont des opérations connues de l'art antérieur et permettent d'obtenir des zéolithes dites stabilisées ou encore ultra-stabilisées. Ainsi MAC DANIEL et MAHER ont-ils revendiqué dans le brevet US 3 293 192 l'obtention de zéolithes Y dites ultrastables caractérisées par un paramètre cristallin de 24,45 × $10^{-10}$ m à 24,2 × $10^{-10}$ m et de faibles pourcentages de sodium, grâce à l'association de traitements hydrothermiques et d'échanges cationiques par des solutions de sels d'ammonium. KERR et al. ont également obtenu des zéolithes Y enrichies en silice par extraction sélective de l'aluminium grâce à un agent chélatant tel que l'éthylène diamine tétraacétique (US 3 442 795).

EBERLY et al. ont combiné ces deux dernières techniques pour l'obtention de zéolithes désaluminées (US 3 506 400 et US 3 591 488). Ils montrent que le traitement hydrothermique consiste à extraire sélectivement les aluminium tétracoordinés de la charpente aluminosilicatée. Ils revendiquent cette procédure ainsi que le traitement ultérieur par des solutions contenant différents cations. Un exemple est donné avec une extraction ultérieure par HCl 0,1 N aboutissant à une faujasite ne contenant plus d'aluminium. [Cet exemple a toutefois été contesté ultérieurement par SCHERZER, lequel n'est pas parvenu à réaliser le produit ainsi décrit (Journal of Catalysis 54, 285, 1978)].

WARD décrit la fabrication de catalyseurs zéolithiques destinés à la fabrication de distillats moyens (US 3 853 742). La zéolithe est stabilisée mais n'est pas soumise à une attaque acide à la fin de la série de traitements, et son paramètre cristallin est compris entre 24,40 et 24,50 × $10^{-10}$ m. BEZMAN et RABO ont utilisé comme base de catalyseurs d'hydrocraquage des zéolithes plus fortement stabilisées, dont le paramètre cristallin varie de 24,20 à $24,45 \times 10^{-10}$ m (EP 0 028 938). Ce type de zéolithe est plus particulièrement caractérisé par une capacité d'échange ionique «IEC» inférieure à 0,07. La capacité d'échange est définie dans ce brevet comme:

IEC: (Ion Exchange Capacity)

$$IEC\ k = \frac{Na_2O\ mol}{SiO_2\ mol}$$

k étant le rapport molaire $SiO_2/Al_2O_3$ déterminé avant le rétroéchange aux ions $Na^+$. Une zéolithe de rapport molaire $SiO_2/Al_2O_3$ égal à k, et d'IEC égal à 0,07 répond à la formule approximative:

$$H_{0,93}Na_{0,07}AlO_2(SiO_2)_{k/2}$$

La capacité de reprise en ions sodium d'un tel produit, exprimé en % poids est:

$$C_{Na} = \frac{23 \times 0,07}{(23 \times 0,07) + 0,93 + [59 + (60 \times \frac{k}{2})]} \times 100$$

Lorsque k = 4,8, $C_{Na}$ = 0,78%
Lorsque k = 10, $C_{Na}$ = 0,45%

Donc pour une valeur d'IEC inférieure ou égale à 0,07, la capacité de reprise en ion sodium $C_{Na}$ est dans tous les cas inférieure à 0,8%.

La zéolithe ultra-stabilisée selon la méthode de BEZMAN et RABO est également caractérisée par un caractère hydrophobe, telle que sa capacité d'adsorption d'eau à 25°C et à une valeur de P/Po de 0,1, soit inférieure à 5%.

SCHERZER (Journal of Catalysis 54, 285, 1978) synthétise par une combinaison de traitements hydrothermiques et acides, et caractérise par diffraction des rayons X, des zéolithes très enrichies en silice (rapport molaire $SiO_2/Al_2O_3 \geqslant 100$). A la même époque, V. BOSACEK et al. réalisent également des traitements similaires pour obtenir une zéolithe ultrastable de rapport $SiO_2/Al_2O_3$ de l'ordre de 75.

Ces produits sont trop fortement désaluminés et pour cette raison, leur intérêt pour l'hydrocraquage est douteux. En effet il faut maintenir un minimum d'atomes d'aluminium dans la structure pour garder une acidité suffisante nécessaire du catalyseur d'hydrocraquage.

Le brevet belge N° 895 873 indique la possibilité de réaliser l'hydrocraquage en vue de produire des distillats moyens grâce à un catalyseur contenant des zéolithes Y traitées à la vapeur d'eau puis lixiviées. Cette zéolithe ultra-stabilisée est caractérisée par différents paramètres, notamment un rapport molaire $SiO_2/Al_2O_3$ supérieur à 10, un paramètre cristallin inférieur à $24,4 \times 10^{-10}$ m, une distribution mésoporeuse particulière. La porosité d'une zéolithe Y, non traitée à la vapeur d'eau et par un acide est totalement comprise dans des pores de diamètre inférieur à $20 \times 10^{-10}$ m.

Les traitements d'ultra-stabilisation modifient cette répartition. Dans ce brevet belge N° 895 873, les traitements décrits créent une mésoporosité centrée sur environ $80 \times 10^{-10}$ m pour une zéolithe traitée à la vapeur d'eau et à environ $135 \times 10^{-10}$ m pour la même zéolithe soumise ultérieurement à un traitement acide.

On a maintenant constaté que les zéolithes préférées comme composants des catalyseurs d'hydrocraquage destiné à produire des distillats moyens doivent avoir une acidité moyenne, c'est-à-dire un rapport molaire $SiO_2/Al_2O_3$ compris entre 8 et 70 et de préférence 12 et 40, une cristallinité conservée au moins à hauteur de 45%, ce qui correspond à une surface spécifique de 400 $m^2/g$, et de préférence 60%, ce qui correspond à une surface spécifique de 550 $m^2/g$, une répartition poreuse comprenant entre 1 et 20% et de préférence entre 3 et 15% du volume poreux contenu dans des pores de diamètre situé entre 20 et $80 \times 10^{-10}$ m, le reste du volume poreux étant contenu essentiellement dans des pores de diamètre inférieur à $20 \times 10^{-10}$ m.

On a en effet constaté que les catalyseurs ainsi préparés donnent des résultats supérieurs en hydrocraquage de coupes lourdes pour produire des distillats moyens.

Sans pouvoir préjuger de toutes les raisons fondamentales qui conduisent aux propriétés remarquables de ces produits, on peut avancer quelques hypothèses.

La modification de ces zéolithes doit se faire en ménageant plusieurs exigences contradictoires: une augmentation du rapport $SiO_2/Al_2O_3$, une création de microporosité secondaire, une conservation de la cristallinité. L'augmentation du rapport $SiO_2/Al_2O_3$ implique un profond remodelage de la structure qui doit s'effectuer dans des conditions expérimentales bien définies, sous peine de destruction partielle ou totale du réseau cristallin. Il faut conserver une bonne cristallinité à la zéolithe, c'est-à-dire garder un réseau tridimensionnel organisé d'atomes de silicium, dans lesquelles subsistent quelques atomes d'aluminium avec leurs protons associés. Mais à l'intérieur de cette charpente tridimensionnelle microporeuse, il faut de plus ménager une microporosité secondaire qui permette de faciliter les processus de diffusion et d'accessibilité des molécules lourdes aux sites acides. Les charges d'hydrocraquage traitées par ce type de catalyseur sont des coupes de point d'ébullition initial généralement supérieur à 350°C environ, et donc, généralement le nombre moyen d'atomes de carbone d'une molécule représentative est situé entre 20 et 40; l'encombrement de ces molécules est important et les limitations diffusionnelles sont préjudiciables à l'activité du catalyseur. Il est donc avantageux de créer une microporosité secondaire dans la zéolithe qui permette de faciliter les processus de diffusion et d'accessibilité aux sites acides. Dans le mécanisme bifonctionnel de l'hydrocraquage il est important aussi que les transferts moléculaires entre les sites acides et les sites hydrogénants soient rapides. En effet les produits déshydrogénés comme les oléfines, produits de désorption des carbocations, émanant des sites acides, doivent pouvoir être hydrogénés rapidement sous peine de subir d'autres transformations sur un

autre site acide. Ces produits sont en effet très réactifs et après réadsorption, ils peuvent soit se recraquer, soit se recombiner avec d'autres molécules et donner des polycondensations. Ces deux phénomènes sont tous les deux préjudiciables au bon fonctionnement du catalyseur, le premier conduit au surcraquage et dégrade la sélectivité en distillats moyens au profit de la production d'essence voire de gaz; le second conduit à la formation de coke et dégrade la stabilité du catalyseur. On voit donc l'importance de faciliter les étapes de diffusion dans le catalyseur. Nous avons cependant constaté que cette microporosité secondaire devait être créée par des pores dont le diamètre ne devait pas excéder 80 $\times 10^{-10}$ m sous peine d'affecter la cristallinité de la zéolithe.

Ce type de zéolithes ultra-stables est obtenu par une combinaison de traitements hydrothermiques et de traitements en phase aqueuse en prenant les deux précautions suivantes:

– les traitements hydrothermiques de stabilisation doivent être effectués dans des conditions relativement plus douce que les procédures classiques de l'art antérieur qui permettent d'arriver aux zéolithes dites ultra-stabilisées, telles que celles décrites par MAC DANIEL et MAHER (US 3 293 192), ou BEZMAN et RABO (EP 0 028 938), afin que le rapport Si/Al de la charpente aluminosilicatée ne soit pas trop élevé. Un traitement hydrothermique est parfaitement défini par la conjonction de trois variables opératoires qui sont: température, temps, pression partielle de vapeur d'eau. La teneur en ions sodium du produit de départ est également importante dans la mesure où ceux-ci bloquent partiellement le processus de désalumination et favorisent la destruction du réseau.

Les conditions optimum du traitement hydrothermique seront précisées plus loin.

La préparation de la zéolithe doit se terminer par un traitement en milieu acide. On a constaté que cette dernière étape avait une influence importante sur l'activité et la sélectivité d'un catalyseur d'hydrocarbures constitué d'une zéolithe Y ainsi modifiée, d'une smectite pontée, d'une matrice et d'une fonction hydrogénante.

Ce traitement acide de la zéolithe stabilisée a des conséquences importantes sur les proprietés physico-chimiques de la zéolithe. Il modifie la surface spécifique (mesurée par la méthode B.E.T.) de la zéolithe. La surface d'une zéolithe NaY non modifié est comprise entre 750 et 950 $m^2/g$ et plus couramment entre 800 et 900 $m^2/g$ et celle d'une zéolithe Y stabilisée de paramètre cristallin inférieur à 24,50 $\times 10^{-10}$ m est couramment comprise entre 350 et 750 $m^2/g$, selon la sévérité du traitement hydrothermique adopté. Après extraction acide la surface remonte de 100 voire de 250 $m^2/g$ selon le type de traitement, ce qui fait passer la valeur de la surface entre 450 et 900 $m^2/g$. Ce résultat montre que la structure a ainsi été partiellement ou totalement dégagée d'espèces aluminiques encombrant les canaux, et bouchant partiellement la microporosité . Ce traitement augmente légèrement les propriétés d'adsorption d'eau des zéolithes ainsi préparées. Ce traitement diminue également de manière substantielle le paramètre cristallin de la maille. La baisse due à ce traitement se situe entre 0,04 et 1 %, plus généralement entre 0,1 et 0,3%. Ce traitement a enfin pour effet bénéfique de faire apparaître ou d'accroître un volume poreux dû à une microporosité secondaire centrée autour de 1,3 à 8 nm de diamètre (méthode B.J.H.). Les conditions optimum du traitement acide seront indiquées ci-après.

Un catalyseur d'hydrocraquage, contenant une zéolithe ainsi préparée, testé avec un résidu sous vide hydrotraité ou une autre charge lourde classique de l'hydrocraquage est beaucoup plus actif et sélectif en distillats moyens qu'un catalyseur de l'art antérieur contenant une zéolithe stabilisée non traitée par un acide. Sans préjuger des raisons de cette amélioration, on peut dire que le traitement acide a modifié la nature et la force de la fonction acide du catalyseur ainsi que l'accessibilité du site aux molécules lourdes hydrocarbonées, lesquelles comprennent typiquement 20 à 40 atomes de carbone par molécule.

Différentes méthodes de préparation peuvent être envisagées selon le type de produit désiré. Il y a deux variantes principales qui diffèrent par le nombre de traitements hydrothermiques nécessaires. Pour des produits moyennement stabilisés, c'est-à-dire moyennement désaluminés au niveau de la charpente aluminosilicatée, un seul traitement suffit; pour des produits plus fortement stabilisés, deux traitements s'avèrent nécessaires. L'art antérieur utilise couramment les valeurs de paramètre cristallin pour situer le niveau de stabilisation.

Pour obtenir des produits dont le paramètre cristallin mesuré en fin de chaîne de préparation est situé entre 24,30 $\times 10^{-10}$ m et 24,55 $\times 10^{-10}$ m (zéolithe moyennement stabilisée), il peut être avantageux économiquement de n'opérer qu'un seul traitement hydrothermique. La zéolithe NaY de départ a classiquement un rapport molaire $SiO_2/Al_2O_3$ compris entre 4 et 6 et un paramètre cristallin compris entre 24,60 et 24,80 $\times 10^{-10}$ m et plus généralement entre 24,65 et 24,75 $\times 10^{-10}$ m. Avant d'effectuer le traitement hydrothermique, il faut abaisser le taux de sodium à moins de 3% poids et de préférence moins de 2,8% poids. Ceci s'effectue classiquement par des échanges répétés dans des solutions d'un sel d'ammonium ionisable, tel que le nitrate, le chlorure, le sulfate ou équivalents. La zéolithe $NH_4NaY$ ainsi obtenu peut être maintenant calcinée dans les conditions suivantes: température comprise entre eviron 500 et 880°C et de préférence entre 600 et 830°C, pression partielle de vapeur d'eau comprise entre environ 0,05 et 10 bars (1 bar = $10^5$ Pa) et de préférence entre 0,1 et 5 bars, temps d'au moins 20 minutes et de préférence supérieur à une heure.

La zéolithe ainsi stabilisée est traité par une solution diluée d'une acide organique ou inorganique, tel les acides chlorhydrique, nitrique, sulfurique, phosphorique, acétique, oxalique, formique ou équivalents, ou par un agent complexant.

Pour obtenir des zéolithes de paramètres allant de 24,24 à 24,35 $\times 10^{-10}$ m, il est préférable de recourir à deux étapes de traitement hydrothermique. La première s'effectue dans des conditions qui peuvent être très douces sur un produit dont le taux de sodium peut être relativement élevé mais toujours

inférieur à 3% et de préférence à 2,8%, de préférence à une température comprise entre 530 et 700°C, de préférence à une pression partielle minmale de vapeur d'eau de 20 torrs (0,026 bar) et un temps d'au moins 20 minutes et si possible supérieur à une heure. Le produit subit ensuite un ou plusieurs échanges dans des solutions d'un sel d'ammonium ionisable, ou encore dans des solutions d'un acide organique ou inorganique, à condition toutefois que de préférence le pH de la solution finale ne soit pas inférieur à 0,5. Il est aussi possible d'utiliser une combinaison de ces deux types d'échange ou de mélanger l'acide à une solution de sels d'ammonium. Le taux de sodium est alors inférieur à 1 % et de préférence à 0,7%. Intervient ensuite un deuxième traitement hydrothermique effectué dans des conditions plus sévères que le premier, à savoir une température comprise entre 600 et 900°C et de préférence entre 650 et 850°C, (la température du deuxième traitement hydrothermique étant supérieure d'environ 20 à 250°C à celle du premier traitement), avec de préférence une pression partielle de vapeur d'eau supérieure à 20 torrs (0,026 bar), et de préférence à 200 torrs (0,26 bar), et un temps d'au moins 30 minutes et de préférence supérieur à une heure.

Le ou les traitements hydrothermiques sont suivis de un ou plusieurs traitements extractifs dans des solutions d'une acide organique ou inorganique, tels les acides chlorhydrique, nitrique, sulfurique, perchlorique, phosphorique, acétique, oxalique, formique ou équivalents. Il est également possible d'utiliser des agents complexants comme ceux de l'art antérieur, tels que l'acide éthylène diamine tétraacétique, l'acétylacétone ou équivalents. Cependant les traitements préférés s'effectuent avec des solutions d'acide chlorhydrique ou nitrique, de normalité comprise entre 0,1 et 11 N de manière préférée entre 0,5 et 3N. Pour ménager la cristallinité de la zéolithe, il peut-être avantageux de procéder à plusieurs attaques successives douces c'est-à-dire dans des solutions d'acide de faible normalité, plutôt qu'une seule attaque dans des conditions plus sévères c'est-à-dire dans un acide concentré; les traitements acides ainsi décrits peuvent toujours être suivis ou précédés de un ou plusieurs échanges classiques avec des sels d'ammonium en vue de réduire davantage la teneur en sodium de la zéolithe finale. Cet échange ionique peut sans inconvénient être réalisé simultanément à l'attaque acide en ajoutant l'acide à la solution aqueuse de sel d'ammonium. Il est également possible après ces traitements acides de procéder à des échanges avec des cations des métaux du groupe IIA, avec des cations de terres rares, ou encore des cations du chrome et du zinc, ou avec tout autre élément utile à améliorer le catalyseur.

Le second constituant du catalyseur de la présente invention est une argile du groupe des smectites (groupe de la montmorillonite) qui a été spécialement modifiée par l'introduction de cales d'oxydes métalliques entre les feuillets pour maintenir l'écartement de ceux-ci obtenu après gonflement de l'argile.

Certaines argiles possèdent en effet une structure lamellaire à réseau expansible. Elles présentent la particularité d'adsorber divers solvants, notamment l'eau, entre les feuillets qui les composent, ce qui provoque un gonflement du solide par suite de l'affaiblissement des liaisons électrostatiques entre les feuillets. Ces argiles appartiennent essentiellement au groupe des smectites (ou encore groupe de la montmorillonite) et pour certaines d'entre elles au groupe des vermiculites. Leur structure est composée de feuillets «élémentaires» à trois couches: deux couches simples de tétraèdres $SiO_4$ dans lesquelles une partie du silicium peut être remplacée par d'autres cations en position tétraédrique tels que $Al^{3+}$ ou éventuellement $Fe^{3+}$, et entre ces deux couches de tétraèdres, une couche d'octaèdres d'oxygènes au centre desquels se situent des cations métalliques tels que $Al^{3+}$, $Fe^{3+}$, $Mg^{2+}$. Cette couche octaédrique est constituée d'un empilement compact d'oxygènes provenant soit des sommets des tétraèdres précédents soit de groupes hydroxyles OH. Le réseau hexagonal compact de ces oxygènes contient 6 cavités octaédriques. Lorsque les locations métalliques occupent 4 de ces cavités (2 cavités sur 3 comme dans le cas de l'aluminium par exemple), la couche est dite dioctaédrique; lorsqu'ils occupent toutes les cavités (3 cavités sur 3 comme dans le cas du magnésium par exemple), la couche est dite trioctaédrique.

Les feuillets élémentaires de ces argiles sont porteurs de charges négatives qui sont compensées par la présence de cations échangeables, alcalins tels que $Li^+$, $Na^+$, $K^+$, alcalino-terreux tels que $Mg^{2+}$, $Ca^{2+}$, et éventuellement l'ion hydronium $H_3O^+$. Les smectites ont des densités de charge sur les feuillets inférieures à celle des argiles du type vermiculite: environ 0,66 charge par maille élémentaire contre environ 1 à 1,4 charge par maille élémentaire pour les vermiculites. Les cations de compensation sont essentiellement le sodium et le calcium dans les smectites, le magnésium et la calcium dans les vermiculites. Du point de vue des densités de charges, smectites et vermiculites sont intermédiaires entre le talc et la pyrophyllite d'une part, dont les feuillets sont neutres et les micas d'autre part, caractérisé par une densité de charges importantes sur les feuillets (environ 2 par maille élémentaire) compensée généralement par des ions $K^+$.

Les cations interfoliaires des smectites et des vermiculites peuvent être assez facilement remplacés par échange ionique par d'autres cations tels, par exemple, des ions ammonium ou des ions de métaux alcalino-terreux ou de métaux de terres rares.

Les proprietés de gonflement des argiles dépendent de divers facteurs dont la densité de charge et la nature du cation de compensation. Ainsi les smectites dont la densité de charge est plus faible que celle des vermiculites présente des propriétés gonflantes nettement supérieures à celle de ces dernières, et constituent donc une classe très intéressante de solides. La distasnce répétitive ou espacement basal représente la distance la plus courte séparant deux motifs cristallographiquement identiques situés dans deux feuillets adjacents. L'espacement basal des smectites peut ainsi atteindre par gonflement des valeurs allant de 1 nm environ à plus de2 nm.

Parmi les silicates phylliteux «gonflants» du type smectites, on peut citer les principaux solides suivant de formule générale:

$(M_1{}^{n+})_{x/n}\ (M_2)_2^{VI}\ (M_3)_4^{IV}\ O_{10}(OH)_2$

où $M_1$ est le cation interfoliaire

$M_2$ est le métal en position octaédrique

$M_3$ est le métal en position tétraédrique,

x est le nombre de charges apportées par le cation $M_1$.

- les smectites dioctaédriques

montmorillonite
$(H, Na, Ca_{1/2})_x\ (Mg_x\ Al_{2-x})^{VI}\ Si_4^{IV}\ O_{10}(OH)_2$

beidellite
$(H, Na, Ca_{1/2})_x\ (Al)_2^{VI}\ (Al_xSi_{4-x})^{IV}\ O_{10}(OH)_2$

nontrolite
$(H, Na, Ca_{1/2...})_x\ (Fe, Al)_2^{VI}\ (Al_xSi_{4-x})^{IV}\ O_{10}(OH)_2$

- les smectites trioctaédriques

hectorite
$Na_x\ (Li_xMg_{3-x})^{VI}\ Si_4^{IV}\ O_{10}\ (OH)_2$

saponite
$Na_xMg_3\ {}^{VI}\ (Al_xSi_{4-x})^{IV}\ O_{10}\ (OH)_2$

stevensite
$Na_{2x}\ Mg_{3-x}^{VI}\ Si_4^{IV}O_{10}\ (OH)_2$

Après adsorption à saturation d'eau ou d'un solvant polaire organique dans une smectite, l'espacement interfoliaire (entre deux feuillets) est maximal. Il peut atteindre une valeur voisine de 1 nm. Ces solides sont donc potentiellement intéressants en catalyse car leur surface spécifique et leur acidité potentielles sont élevées. Les smectites ont malheureusement l'inconvénient de perdre leur caractère expansé par chauffage à 100°C et de ce fait de ne pas conserver l'augmentation de surface spécifique résultant de leur expansion.

Différents méthodes ont été décrites dans l'art antérieur pour introduire entre les feuilles des smectites des piliers ou ponts pour obtenir des smectites pontées qui conservent un espacement interfoliaire élevé après avoir été soumises à un traitement thermique.

Une méthode consistant à introduire des ponts constitués par des oligomères d'un hydroxyde d'un métal, notamment d'hydroxyde d'aluminium, à été décrite par LAHAV, SHAMI et SHABTAI dans Clays and Clays Mineral, vol. 26 (n° 2), p. 107-115 (1978) et dans le brevet français 2 394 324. Leur préparation et leur utilisation au craquage catalytique est également décrite dans le brevet US 4 238 364. La formation de ponts constitués d'oligomères d'hydroxydes d'aluminium, d'hydroxydes d'aluminium et de magnésium, d'hydroxydes de zirconium, d'hydroxydes mixtes de silicium et de bore, est décrite dans le brevet US 4 248 739. Une technique de pontage des smectites, par dialyse, à l'aide d'hydroxydes d'aluminium de chrome, de zirconium et titane etc... est revendiquée dans le brevet européen 0 073 718.

Ces méthodes consistent dans leur principe à mettre l'argile au contact d'une solution contenant des espèces ioniques plus ou moins oligomérisées du type hydroxy-aluminique (dans le cas de l'aluminium). Cette opération est réalisée généralement en solution peu concentrée, à température inférieure à 80°C et si possible en l'absence de trouble constitué par un début de précipitation de l'hydroxyde métallique. Les concentrations de l'ion métallique et de l'argile doivent être optimisées pour qu'il y ait formation de suffisamment de piliers solides et que la porosité de l'argile ne soit pas fortement diminuée par l'insertion d'une trop grande quantité d'oxyde métallique.

Lorsque les ions interfoliaires alcalins ou alcalino-terreux sont remplacés par des protons soit directement à l'aide d'une solution aqueuse très diluée d'un acide, soit de préférence par échange avec un sel d'ammonium suivi d'une calcination entre 300 et 700°C, les smectites pontées acquièrent une acidité forte quoique inférieure globalement à celles des zéolithes classiques de type Y ou mordénite par exemple. Cette acidité peut être utilisée avec profit dans des opérations de craquage de molécules lourdes en présence d'hydrogène.

La smectite pontée acide ainsi obtenue est caractérisée notamment par sa densité de charge, sa surface spécifique et la valeur de son espacement basal. Les smectites pontées particulièrement souhaitables pour les catalyseurs d'hydroconversion de la présente inversion sont celles dont les valeurs des trois caractéristiques mentionnées ci-dessus sont comprises à l'intérieur des fourchettes respectives suivantes:

Densité de charge: 0,6 à 1,2 $meq \cdot g^{-1}$ (milliéquivalent/gramme)
Surface spécifique: 200 à 600 $m^2 \cdot g^{-1}$
Espacement basal: 1,6 à 2,0 nm.

Les smectites pontées que l'on peut employer dans la présente invention sont celles dont l'écartement des feuillets est maintenu par la présence de cales constituées d'oxydes d'au moins un métal ou métalloïde choisi par exemple dans le groupe formé par le bore, le magnésium, l'aluminium, le phosphore, le silicium, le titane, le chrome, le zirconium, le molybdène et le tungstène.

Dans une forme préférée de réalisation, les cales sont constituées d'au moins un oxyde métallique, l'oxyde d'aluminium étant particulièrement préféré.

Le troisième constituant du catalyseur de la présente invention est une matrice amorphe à base d'alumine dans laquelle on incorpore les deux constituants définis précédemment (zéolithe acide Y stabilisée et smectite pontée). Plus précisément cette matrice amorphe est choisie dans le groupe constituée par les alumines du type $\gamma$, $\eta$, $\delta$ ou $\theta$, ou les mélanges de ces derinières, ou d'alumine associée à l'un au moins des oxydes des éléments choisis parmi le bore, le magnésium, le silicium, le phosphore, le calcium, le titane, le vanadium, le chrome, le manganèse, le fer, le gallium, l'yttrium, le zirconium, l'étain, le lanthane, le cérium, le praséodyme, le néodyme.

De préférence la matrice amorphe contient au moins 50% en poids d'alumine.

La smectite pontée peut être avantageusement préparée au cours de l'opération d'incorporation de la smectite originelle à la matrice à base d'alumine. La technique la plus simple d'incorporation consiste à malaxer la smectite humide au gel humide (préalablement peptisé par addition d'un acide) des oxydes constituant la matrice. Il est probable que les oligomères ioniques, par exemple, hydroxyaluminiques, libérés au moment de la peptisation du gel migrent et s'intercalent en cours de malaxage dans les feuillets de la smectite. La zéolithe peut être introduite à n'importe quel stade du malaxage, mais la méthode préférée dans la présente invention consiste à l'introduire quelques minutes ou dizaines de minutes après l'introduction de la smectite.

Le quatrième constituant du catalyseur de la présente invention est le composant d'hydro-déshydrogénation. Il comprend par exemple un composé d'un métal du groupe VIII de la classification périodique des éléments, (notamment le nickel, le palladium ou le platine), ou une combinaison d'au moins deux des composés précédents, ou une combinaison de composés de métaux (oxydes notamment) des groupes VIB (molybdène et/ou tungstène notamment) et des métaux non nobles du groupe VIII (cobalt et/ou nickel notamment) de la classification périodique des éléments.

Cette fonction hydro-déshydrogénante peut être introduite en partie seulement (cas des associations d'oxydes de métaux des groupes VIB et VIII) ou en totalité au moment du malaxage de la smectite pontée avec le gel d'oxyde choisi comme matrice et de la zéolithe. Elle peut être introduite par une ou plusieurs opérations d'échange ionique sur le support calciné constitué de la zéolithe HY et de la smectite pontée dispersées dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (Co et/ou Ni notamment) lorsque les précurseurs des oxydes des métaux du groupe VIB (Mo et/ou W) ont été préalablement introduits au moment du malaxage du support. Elle peut enfin être introduite par une ou plusieurs opérations d'imprégnation du support calciné constitué de zéolithe HY, de la smectite pontée et de la matrice, par des solutions contenant les précurseurs des oxydes de métaux des groupes VIB et/ou VIII, les précurseurs des oxydes des métaux du groupe VIII étant de préférence introduits après ceux du groupe VIB ou en même temps que ces derniers. Les principaux sels précurseurs qui peuvent être utilisés sont par exemple:

pour le groupe VIII (cobalt ou nickel): nitrate, acétate, sulfate des cations bivalents hydratés ou des cations hexamines $Co(NH_3)_6^{2+}$ et $Ni(NH_3)_6^{2+}$

pour le groupe VIB (Mo ou W): les divers molybdates ou tungstates d'ammonium connus.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium.

Dans le cas où le pontage de la smectite est réalisé au cours du malaxage de cette dernière avec le constituant à base d'alumine, il est possible d'introduire les métaux du groupe VIB et, éventuellement, ceux du groupe VIII, pendant le malaxage à l'aide de solutions contenant les sels des métaux correspondant et de l'eau oxygénée dont la décomposition peut favoriser le gonflement de la smectite.

Le catalyseur final doit comprendre entre 1 et 70% en poids de zéolithe spécialement modifiée, et de préférence entre 3 et 50%, entre 1 et 70% et de préférence entre 3 et 60% en poids de smectite pontée, entre 5 et 97% et de préférence entre 10 et 90% en poids d'une matrice amorphe constituée d'alumine libre ou combinée à un oxyde amorphe autre qu'une argile. Les concentrations des composés métalliques, exprimées en composé métallique sont les suivantes: 0,01 à 5% poids de métaux du groupe VIII, et de préférence entre 0,03 et 3% poids, dans le cas où il s'agit uniquement de métaux nobles du type palladium ou platine, 0,01 à 15% poids de métaux nobles du groupe VIII, et de préférence entre 0,05 et 10% poids, dans le cas où il s'agit de métaux non nobles du groupe VIII du type nickel par exemple; lorsqu'on utilise à la fois au moins un métal ou composé de métal du groupe VIII et au moins un composé d'un métal du groupe VIB, on emploie 5 à 40% en poids d'une combinaison d'au moins un composé (oxyde notamment) d'un métal du groupe VIB (molybdène ou tungstène notamment) et d'au moins un métal ou composé de métal du groupe VIII (cobalt ou nickel notamment) et de préférence 12 à 30%, avec un rapport pondéral (exprimé en oxydes métalliques) métaux du groupe VIII sur métaux du groupe VIB compris entre 0,05 et 0,8 et de préférence entre 0,13 et 0,5.

Les catalyseurs ainsi obtenus sont utilisés pour l'hydrocraquage de coupes lordes, et présentent une activité améliorée par rapport à l'art antérieur, et ont de plus une sélectivité améliorée pour la production de distillats moyens de très bonne qualité. L'addition de smectite pontée notamment au catalyseur contenant une zéolithe Y acide ultrastabilisée, permet d'améliorer sensiblement les performances catalytiques de ce dernier en hydrocraquage.

Les charges employées dans ce procédé sont des gas oils, des gas oils sous vide résidus désasphaltés ou hydrotraités ou équivalents. Elles sont constituées au moins à 80% en volume de composés dont les points d'ébullition sont situés entre 350 et 580°C. Elles contiennent des hétéroatomes tels que soufre et azote. Les conditions de l'hydrocraquage telles que, température, pression, taux de recyclage d'hydrogène, vitesse volumique horaire, devront être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 et 2000 ppm, et les teneurs en soufre entre 50 et 30.000 ppm.

Les températures d'hydrocraquage sont en général supérieures à 230°C et souvent comprises entre 300°C et 430°C. La pression est supérieure à 15 bars et en général supérieure à 30 bars. Le taux de recyclage d'hydrogène est au minimum de 100 et souvent compris entre 260 et 3000 litres d'hydrogène par litre de charge. La vitesse volumique horaire est comprise en général entre 0,2 et 10.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseurs permet d'atteindre dans des conditions de marche classique des sélectivités en distillats de point d'ébullition compris entre 150 et 380°C supérieurs à 67%, et ceci pour des niveaux de conversion, en produits de point d'ébullition inférieur à 380°C, supérieurs à 55% en volume. Ce catalyseurs présente de plus, dans ces conditions, une stabilité remarquable, ce qui est dû notamment à la haute surface spécifique du produit. Enfin, du fait de la composition du catalyseur, de la qualité de la zéolithe, et de la bonne stabilité thermique de la smectite pontée, le catalyseur est facilement régénérable.

Les caractéristiques de l'invention sont précisées par quelques exemples présentés ci-après:

*Exemple 1*

*Préparation d'une zéolithe HY stabilisée et traitée par un acide.*

On utilise une zéolithe NaY de formule $NaAlO_2 (SiO_2)_{2,5}$.

Cette zéolithe dont les caractéristiques sont:

| | |
|---|---|
| rapport $SiO_2/Al_2O_3$ molaire: | 5 |
| paramètre cristallin: | $24,69 \times 10^{-10}$ m |
| capacité d'adosprtion de vapeur d'eau à 25°C (à P/Po : 0,1) | 26% |
| surface spécifique: | 880 $m^2/g$ |

et soumise à quatre échanges consécutifs dans des solutions de nitrate d'ammonium de concentration 2M, à une température de 95°C, pendant un temps de 1 h 30, et avec un rapport volume de solution sur poids de zéolithe égal à 8. Le taux de sodium de la zéolithe $NaNH_4Y$ obtenu est de 0,95% poids. Ce produit est ensuite introduit rapidement dans un four préchauffé à 770°C et laissé pendant 4 heures en atmosphère statique (donc en l'absence de tout balayage gazeux). La zéolithe est ensuite soumise à un traitement dans les conditions suivantes: le rapport entre le volume d'acide nitrique 2 N et le poids de solide est de 6, la température est de 95°C, et le temps de 3 heures. Ensuite un autre traitement dans les mêmes conditions est effectué, mais avec un acide de normalité 0,3 N. Le rapport molaire $SiO_2/Al_2O_3$ est alors de 18, le taux de sodium résiduel de 0,1%, le paramètre cristallin de 24,32 Å, la surface spécifique de 805 $m^2/g$, la capacité de reprise en eau de 13,7% la capacité de reprise en ions sodium de 1,8% poids, le pourcentage de volume poreux contenu dans des pores de diamètre 25 à 60 $\times 10^{-10}$ m de 11%, le reste du volume poreux étant contenu dans des pores de diamètre inférieur à $20 \times 10^{-10}$ m.

*Exemple 2*

*Préparation d'une zéolithe HY stabilisée et traitée par un acide.*

La zéolithe NaY utilisée dans l'exemple 1 est soumise à deux échanges dans des solutions de chlorure d'ammonium de façon à ce que le taux de sodium soit de 2,5%. Le produit est ensuite introduit dans un four froid et calciné sous air sec jusqu'à 400°C. A cette température, on introduit dans l'atmosphère de calcination un débit d'eau correspondant, après vaporisation, à une pression partielle de 380 torrs (50661 Pa). La température est alors portée à 565°C pendant 2 heures. Le produit est ensuite soumis à un échange avec une solution de chlorure d'ammonium suivie d'un traitement acide très ménagé aux conditions suivantes: volume d'acide chlorhydrique 0,4 N sur poids de solide de 10, temps de 3 heures. Le taux de sodium baisse alors jusqu'à 0,6%, le rapport $SiO_2/Al_2O_3$ est de 7,2. Ce produit est alors soumis a un self-steaming à 780°C pendant 3 heures, puis à nouveau repris en solution acide par de l'acide chlorhydrique de normalité 2 et un rapport volume de solution sur poids de zéolithe de 10. Le paramètre cristallin est de $24,28 \times 10^{-10}$ m, la surface spécifique de 825 $m^2/g$, la capacité de reprise en eau de 11,7%, la capacité de reprise en ions sodium de 1,2% poids. La teneur en sodium est de 0,05% poids, et le pourcentage de volume poreux contenu dans des pores de diamètre 2 à 6 nm de 13%, le reste du volume poreux étant contenu dans des pores de diamètre inférieur à $20 \times 10^{-10}$ m.

*Exemple 3*

*Préparation d'une smectite pontée.*

114 g d'une montmorillonite synthétique commercialisée par la Société BAROID division NL Industries (HOUSTON-TEXAX) sous le nom mica-montmorillonite SMM et donc les principales caractéristiques sont présentées dans le tableau 1, sont plongés dans 2,5 litres d'eau disatillée et agités pendant 1 heure.

TABLEAU 1

Caractéristiques de la mica-montmorillonite SMM de départ

| | | |
|---|---|---|
| Composition % poids: | $SiO_2$ = 48 | $Al_2O_3$ = 37 |
| | $NH_3$ = 2,6 | F = 1,6 |
| | $H_2O$ = 12 | |
| Surface | S = 110 - 160 $m^2 \cdot g^{-1}$ | |
| Capacité d'échange ionique ou densité de charge = 1,5 - 1,6 meq $\cdot g^{-1}$ | | |
| Produit en microsphère de 20 à 80 μm | | |

Parallèlement une solution 0,2 M en $AlCl_3$ est neutralisée, par addition d'ammoniaque diluée jusqu'à pH 4, et vieillie pendant 24 heures; 1,5 litre de cette dernière solution est ajoutée à la suspension précédente de mica-montmorillonite et le mélange est agité vigoureusement pendant 4 heures. Le solide obtenu est lavé et centrifugé. Son espacement basal mesuré après séchage à 120°C est de 1,82 nm, sa surface spécifique de 320 $m^2 \times g^{-1}$ et sa densité de charge de 0,9 meq $\times g^{-1}$.

*Exemple 4*

*Préparation des catalyseurs A et B, selon la présente invention.*

Les zéolithes des exemples 1 et 2 et la smectite pontée de l'exemple 3 sont utilisées pour préparer des catalyseurs de composition pondérale suivante:

12 % zéolithe
20 % smectite
4,5% NiO
15 % $MoO_3$
48,5% $Al_2O_3$ (matrice)

L'alumine de départ est une pseudo-boehmite obtenue par hydrolyse d'un alcoolate d'aluminium. Elle est notamment commercialisée par la Société CONDEA sous l'appellation PURAL (comparable au produit CATAPAL commercialisé aux U.S.A. par Conoco Chemical Division of Continental Oil Company) et peut être obtenue dans plusieurs qualités différentes correspondant à des dimensions D de particules d'alumine différentes:

PURAL SB: dimensions D des particules réparties autour de 10 nm environ.
PURAL 100: dimensions D réparties autour de 20 nm environ.
PURAL 200: dimensions D réparties autour de 40 nm environ.

Pour le présent exemple, la qualité d'alumine retenue est le PURAL SB.

Cette alumine est tout d'abord peptisée par ajout d'acide nitrique de manière à obtenir una pâte, soigneusement mélangée et malaxée avec la smectite puis avec la zéolithe, puisextrudée par une filière de diamètre 1,6 mm, séchée à 120°C pendant 16 heures et calcinée pendant 2 heures à 500°C, après la montée en température jusqu'à 500°C à une vitesse de 2,5°C par minute. Le support obtenu est ensuite imprégné en deux étapes successives par une solution d'heptamolybdate d'ammonium puis de nitrate de nickel, ces deux étapes étant séparée par une calcination de 2 heures à 400°C. Le catalyseur est enfin calciné à 500°C pendant 2 heures. A la zéolithe décrite dans l'exemple 1 correspond le catalyseur A et à celle de l'exemple 2, le catalyseur B. Les catalyseurs A et B ont des surfaces spécifiques respectivement égales à 263 $m^2 \cdot g^{-1}$ et 271 $m^2 \cdot g^{-1}$.

*Exemple 5* (comparatif)

*Préparation des catalyseurs C et D.*

A partir des zéolithes des exemples 1 et 2, on recommence une préparation comparable à celle de l'exemple 4 pour aboutir à des catalyseurs C et D ayant une teneur identique en zéolithe et oxydes des métaux des groupes VIB et VIII mais dans lesquels la smectite absente est remplacée par l'alumine.

*Exemple 6*

*Préparation du catalyseur E selon la présente invention.*

Une silice-alumine de composition pondérale 25% $SiO_2$-75% $Al_2O_3$ est préparée par les étapes successives suivantes:

1) neutralisation d'une solution de silicate de sodium par $NO_3H$.

2) lavage du gel de silice obtenu.

3) addition d'une solution de nitrate d'aluminium à la suspension du gel de silice.

4) addition d'ammoniaque pour précipiter l'hydroxyde d'aluminium.

5) lavage et filtration du gel de silice-alumine obtenu pour éliminer au maximum les ions génants ($Na^+$, $NO_3^-$).

Le catalyseur E est préparé en incorporant soigneusement la smectite pontée de l'exemple 3, puis la zéolithe de l'exemple 1 dans èa silice-alumine ainsi obtenue, en malaxant le mélange, en l'extrudant à l'aide d'une filière de 1,6 mm, puis en calcinant les extrudés à 500°C pendant 2 heures, avec une vitesse de montée en température identique à celle de l'exemple 4. Le support obtenu est ensuite imprégné d'une manière identique à celle définie dans l'exemple 4 et enfin calciné à 500°C pendant 2 heures. Le catalyseur final E a la composition pondérale finale suivante:

12 % zéolithe
20 % smectite
4,5% NiO
15 % $MoO_3$
36,4% $Al_2O_3$
12,1% $SiO_2$

*Exemple 7* (comparatif):

*Préparation du catalyseur F.*

On recommence une préparation comparable à celle de l'exemple 6 sans ajouter de smectite au cours du malaxage. Les teneurs en zéolithe (celle de l'exemple 1) et oxydes des métaux des groupes VIB et VIII sont conservées identiques; la smectite est remplacée en totalité par de l'alumine PURAL SB.

*Exemple 8*

*Conditions du test à haute pression.*

Les catalyseurs dont les préparations sont décrits aux exemples précédents sont utilisés dans les conditions de l'hydrocraquage sur une charge dont les caractéristiques suivent:

| | | |
|---|---|---|
| Charge | Point initial | 318°C |
| | Point 10% | 378 |
| | Point 50% | 431 |
| | Point 90% | 467 |
| | Point final | 494 |
| | Densité $d_4^{20}$ | 0,854 |
| | N (ppm) | 980 |
| | % S | 1,92 (poids) |

L'unité de test catalytique comprend un réacteur en lit fixe monté en «up flow» où sont introduits 60 ml de catalyseur. Le catalyseur est présulfuré par un mélange $H_2/H_2S$ (97-3) jusqu'à 420°C. La pression et de 120 bars, le recyclage d'hydrogène de 1.000 litres par litre de charge: la vitesse volumique horaire de 1.

*Exemple 9*

*Résultats obtenus avec les catalyseurs A, B, C et D.*

Les catalyseurs ont été comparés à conversion voisine et donc à température différente. La conversion est définie comme étant la fraction de la recette à point d'ébullition inférieure à 380°C. La selectivité est définie comme étant la fraction de la recette de points d'ébullition compris entre 150 et 380°C, ramenée à la conversion.

Les résultats sont présentés dans le tableau suivant:

| Catalyseur | T°C | Conversion | Sélectivité |
|---|---|---|---|
| A | 350 | 80,3 | 77,5 |
| B | 355 | 79,3 | 79,6 |
| C | 355 | 80,1 | 76,8 |
| D | 360 | 79,2 | 78,7 |

Ce tableau montre que les catalyseurs A et B préparés selon la présente invention ont une actitvité supérieure et une sélectivité légèrement supérieure à celles des catalyseurs C et D.

*Exemple 10*

*Résultats obtenus avec les catalyseurs E et F.*

Les résultats sont présentés dans le tableau suivant:

| Catalyseur | T°C | Conversion | Sélectivité |
|---|---|---|---|
| E | 355 | 80,1 | 76,6 |
| F | 360 | 79,5 | 75,8 |

Le catalyseur E préparé selon la présente invention a une activité supérieure et une sélectivité légèrement supérieure à celles du catalyseurs F.

*Exemple 11*

*Conditions du test à basse pression.*

Les catalyseurs A et C sont comparés dans un test basse pression sur charge assez faiblement polluée en soufre at azote. Le test s'inscrit dans une optique d'hydrocraquage à basse pression sur une charge préalablement hydrotraitée.

Un résidu sous vide de densité ($d_4^{20}$) 0,906 et de teneur en soufre 2,37% poids est hydrotraité à bars sur un catalyseur conventionnel non acide: la recette est distillée et la coupe 295-500 est à son tour hydrocraquée sur les catalyseurs A et C à 60 bars. La charge a les caractéristiques suivantes:

$d_4^{20}$ = 0,871
S (ppm) = 500
N (ppm) = 130

La pression est de 60 bars, le recyclage d'hydrogène de 700 litres d'hydrogène par litre de charge, la vitesse volumique horaire de 1.

*Exemple 12*

*Résultats obtenus avec les catalyseurs A et C dans le test basse pression.*

La conversion et la sélectivité sont définies comme dans l'exemple 9. Ici on a opéré avec sensiblement les mêmes températures pour les deux catalyseurs.

Les résultats sont présentés dans le tableau suivant:

| Catalyseur | T°C | Conversion | Sélectivité |
|---|---|---|---|
| A | 345 | 75,9 | 59,3 |
| | 335 | 66,0 | 71,6 |
| C | 350 | 71,0 | 53,0 |
| | 340 | 59,2 | 65,6 |

Là encore le catalyseur A préparé selon la présente invention a une activité et une selectivité supérieures à celles du catalyseur de référence C.

**Revendications**

1. Catalyseur renfermant en poids:

a) 1 à 70% d'une argile pontée appartenant au groupe des smectites, dont l'écartement des feuillets est maintenue par la présence de cales constituées d'oxydes de l'un au moins des éléments suivants: bore, magnésium, aluminium, phosphore, silicium, titane, chrome, zirconium, molybdène, tungstène.

b) 1 à 70% d'une zéolithe acide de type Y stabilisée

– de rapport molaire $SiO_2/Al_2O_3$ de 8 à 70,

– de teneur en sodium inférieure à 0,15% en poids déterminée sur la zéolithe calcinée à 1100°C,

– de paramètre $a_o$ de la maille élémentaire compris entre $24{,}55 \times 10^{-10}$ m et $24{,}24 \times 10^{-10}$ m,

– de capacité $C_{Na}$ de reprise en ions sodium, exprimée en grammes de sodium par 100 grammes de zéolithes modifiée, neutralisée et calcinée supérieure à environ 0,85,

– de surface spécifique supérieure à 400 $m^2 \cdot g^{-1}$,

– de capacité d'adsorption de vapeur d'eau à 25°C supérieure à 6% poids (à un rapport P/Po égal à 0,10),

– de répartition poreuse comprenant entre 1 et 20% du volume poreux contenu dans des pores de diamètre situé entre $20 \times 10^{-10}$ m et $80 \times 10^{-10}$ m, le reste du volume poreux étant essentiellement contenu dans des pores de diamètre inférieur à $20 \times 10^{-10}$ m.

c) 5 à 97% d'une matrice amorphe constituée d'alumine libre du type $\gamma$, $\eta$, $\delta$ ou $\theta$, ou des mélanges de ces dernières ou d'alumine associée à l'un au moins des oxydes des éléments suivants: bore, magnésium, silicium, phosphore, calcium, titane, vanadium, chrome, manganèse, fer, gallium, yttrium, zirconium, étain, lanthane, cérium, praséodyme, néodyme.

d) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,01 et 5%, la concentration en métal ou métaux non nobles du groupe VIII, exprimée en poids de ce ou ces métaux, étant comprise entre 0,01 et 15%.

2. Catalyseur renfermant en poids:

a) 1 à 70% d'une argile pontée appartenant au groupe des smectites, dont l'écartement des feuillets est maintenue par la présence de cales constituées d'oxydes de l'un au moins des éléments suivants: bore, magnésium, aluminium, phosphore, silicium, titane, chrome, zirconium, molybdène, tungstène.

b) 1 à 70% d'une zéolithe acide de type Y stabilisée

– de rapport molaire $SiO_2/Al_2O_3$ de 12 à 40,

– de teneur en sodium inférieure à 0,15% en poids déterminée sur la zéolithe calcinée à 1100°C,

– de paramètre $a_o$ de la maille élémentaire compris entre $24,38 \times 10^{-10}$ m et $24,26 \times 10^{-10}$ m,

– de capacité $C_{Na}$ de reprise en ions sodium, exprimée en grammes de sodium par 100 grammes de zéolithe modifiée, neutralisée et calcinée supérieure à environ 0,85,

– de surface spécifique supérieure à 550 $m^2 \cdot g^{-1}$,

– de capacité d'adsorption de vapeur d'eau à 25°C (à un rapport P/Po égal à 0,10) supérieur à 6% poids,

– de répartition poreuse comprenant entre 3 et 15% du volume poreux contenu dans des pores de diamètre situé entre $20 \times 10^{-10}$ m et $80 \times 10^{-10}$ m, le reste du volume poreux étant contenu dans des pores de diamètre inférieur à $20 \times 10^{-10}$ m.

c) 5 à 97% d'une matrice amorphe constituée d'alumine libre du type $\gamma$, $\eta$, $\delta$ et $\theta$, ou de ladite alumine associée à l'un au moins des oxydes des éléments suivants: bore, magnésium, silicium, phosphore, calcium, titane, vanadium, chrome, manganèse, fer, gallium, yttrium, zirconium, étain, lanthane, cérium, praséodyme, néodyme.

d) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,03 et 3%, la concentration en métal ou métaux non nobles du groupe VIII, exprimée en poids de ce ou ces métaux, étant comprise entre 0,05 et 10%.

3. Catalyseur selon la revendication 1 ou 2 dans lequel la smectite pontée a une densité de charge de 0,6 à 1,2 meq $\cdot g^{-1}$, une surface spécifique de 200 à 600 $m^2 \times g^{-1}$, un espacement basal de 1,6 à 2,0 nm.

4. Catalyseur selon l'une des revendications 1 à 3, dans lequel on utilise au moins un composé d'un métal du groupe VIII choisi dans le groupe constitué par le cobalt et le nickel, en association avec au moins un composé d'un métal du groupe VIB de la classification périodique des éléments, la concentration totale en oxyde de métaux des groupes VIII et VIB étant comprise entre 5 et 40%, le rapport pondéral (exprimé en oxydes métalliques) métal ou métaux du groupe VIII/métal ou métaux du groupe VIB étant compris entre 0,05 et 0,8.

5. Catalyseur selon la revendication 4 dans lequel le métal du groupe VIB est le molybdène ou le tungstène, la concentration totale en oxyde de métaux des groupes VIII et VIB étant comprise entre 12 et 30%, le rapport pondéral métal ou métaux du groupe VIII/métal ou métaux du groupe VIB étant compris entre 0,13 et 0,5.

6. Catalyseur selon l'une des revendications 1 à 5, caractérisé en ce que les ponts permettant de maintenir un espacement basal important entre les feuillets de la smectite, sont constitués d'alumine.

7. Catalyseur selon l'une des revendications 1 à 6, caractérisé en ce que la teneur en smectite pontée est comprise entre 3 et 60% en poids.

8. Catalyseur selon l'une des revendications 1 à 7, caractérisé en ce que la teneur en zéolithe acide du type Y stabilisée est comprise entre 3 et 50% en poids, et la teneur en matrice amorphe est comprise entre 10 et 90% en poids.

9. Catalyseur selon l'une des revendications 1 à 8, caractérisé en ce que la matrice amorphe est constituée d'alumine ou d'une silice-alumine contenant au moins 50% en poids d'alumine.

10. Utilisation d'un catalyseur selon l'une des revendications1 à 9 pour l'hydrocraquage de charges hydrocarbonées.

**Patentansprüche**

1. Katalysator, enthaltend in Gew.-%:

a) 1 bis 70% eines Tons mit Blattstruktur aus der Gruppe der Smektite, dessen Blättchenabstand durch das Vorliegen von Einlagerungen aufrechterhalten wird, die aus Oxiden von zumindest einem der folgenden Elemente, bestehen: Bor, Magnesium, Aluminium, Phosphor, Silizium, Titan, Chrom, Zirkonium, Molybdän, Wolfram.

b) 1 bis 70% eines stabilisierten sauren Zeoliths des Y-Typs,

– mit einem Molverhältnis $SiO_2/Al_2O_3$ zwischen 8 und 70,

– einem Natriumgehalt unter 0,15 Gew.-%, bestimmt an dem bei 1100°C gebrannten Zeolith,

– mit einem $a_o$-Parameter der Elementarzelle zwischen $24,55 \times 10^{-10}$ m und $24,24 \times 10^{-10}$ m,

– mit einer Aufnahmefähigkeit $C_{Na}$ an Natriumionen, ausgedrückt in g Natrium pro 100 g modifiziertem neutralisiertem und geglühtem Zeolith von mehr als etwa 0,85,

– mit einer spezifischen Oberfläche von mehr als 400 $m^2 \times g^{-1}$,

– mit einer Adsorptionsfähigkeit für Wasserdampf bei 25°C von mehr als 6 Gew.-% (bei einem P/Po-Verhältnis von 0,10),

– mit einer Porenverteilung, die zwischen 1 und 20% des Porenvolumens in den Poren mit einem Durchmesser zwischen $20 \times 10^{-10}$ m und $80 \times 10^{-10}$ m und den Rest des Porenvolumens im wesentlichen in den Poren mit einem Durchmesser unterhalb $20 \times 10^{-10}$ m aufweist.

c) 5 bis 97% einer amorphen Matrix, die aus freiem Aluminiumoxid vom γ-, η-, δ- oder θ-Typ oder aus Gemischen dieser Letzteren oder aus Aluminiumoxid mit einem Gemisch mit mindestens einem der Oxide der folgenden Elemente besteht: Bor, Magnesium, Silizium, Phosphor, Calcium, Titan, Vanadium, Chrom, Mangan, Eisen, Gallium, Yttrium, Zirkonium, Zinn, Lanthan, Cer, Praseodym, Neodym.

d) mindestens ein Metall oder eine Metallverbindung aus der Gruppe der Edel- oder Nichtedelmetalle der Gruppe VIII des periodischen Systems der Elemente, wobei die Konzentration an Edelmetall der Gruppe VIII, ausgedrückt in Gewicht des Metalls oder dieser Metalle zwischen 0,01 und 5% liegt und die Konzentration an Nichtedelmetall der Gruppe VIII, ausgedrückt als Gewicht des Metalls oder der Metalle zwischen 0,01 und 15% liegt.

2. Katalysator, enthaltend in Gew.-%:

a) 1 bis 70% eines Tons mit Blättchenstruktur aus der Gruppe der Smektite, dessen Blättchenabstand durch das Vorliegen von Einlagerungen aus Oxiden von einen oder mehreren der folgenden Elemente, bestimmt wird: Bor, Magnesium, Aluminium, Phosphor, Silizium, Titan, Chrom, Zirkon, Molybdän, Wolfram.

a) 1 bis 70% eines stabilisierten sauren Zeoliths vom Y-Typs.

– mit einem molaren Verhältnis $SiO_2/Al_2O_3$ von 12 bis 40,

– mit einem Natriumgehalt unter 0,15 Gew.-%, bestimmt an dem bei 1100°C geglühten Zeolith,

– mit einem $a_0$-Parameter der Elementarzelle zwischen $24{,}38 \times 10^{-10}$ m und $24{,}26 \times 10^{-10}$ m,

– mit einer Ionenaustauschkapazität $C_{Na}$ für Natrium, ausgedrückt in g Natrium pro 100 g modifiziertem, neutralisiertem und geglühtem Zeolith, von über etwa 0,85,

– mit einer spezifischen Oberfläche über 550 $m^2$ pro $g^{-1}$,

– mit einer Adsorptionsfähigkeit für Wasserdampf bei 25°C (bei einem Verhältnis P/Po von 0,10) von über 6 Gew.-%,

– mit einer Porenverteilung, die 3 bis 15% des Porenvolumens in den Poren mit Durchmesser zwischen $20 \times 10^{-10}$ m und $80 \times 10^{-10}$ m und den Rest des Porenvolumens in den Poren mit Durchmessern kleiner als $20 \times 10^{-10}$ m aufweist.

c) 5 bis 97% einer amorphen Matrix, die aus freiem Aluminiumoxid vom γ-, η-, δ- und θ-Typ besteht oder aus diesen Aluminiumoxidgemischen mit einem oder mehreren der Oxide der folgenden Elemente: Bor, Magnesium, Silizium, Phosphor, Calcium, Titan, Vanadium, Chrom, Mangan, Eisen, Gallium, Yttrium, Zirkonium, Zinn, Lanthan, Cer, Praseodym, Neodym,

d) mindestens ein Metall oder eine Metallverbindung aus der Gruppe der Edelmetalle oder Nichtedelmetalle der Gruppe VIII des periodischen Systems der Elemente, wobei die Konzentration an Edelmetall der Gruppe VIII, ausgedrückt in Gewicht des Metalls oder der Metalle, zwischen 0,03 und 3% beträgt und die Konzentration an Nichtedelmetall der Gruppe VIII, ausgedrückt als Gewicht des Metalls oder der Metalle zwischen 0,05 und 10% beträgt.

3. Katalysator nach Anspruch 1 oder 2, dadurch gekennzeichnet, dass der Smektit mit Blättchenstruktur eine Beladungsdichte vo 0,6 bis 1,2 meq · $g^{-1}$, eine spezifische Oberfläche von 200 bis 600 $m^2 \times g^{-1}$ und einen Basisabstand von 1,6 bis 2,0 nm aufweist.

4. Katalysator nach einem der Ansprüche 1 bis 3, dadurch gekennzeichnet, dass mindestens eine Verbindung eines Metalls der Gruppe VIII verwendet wird, die aus der Gruppe Kobalt und Nickel besteht, zusammen mit mindestens einer Verbindung eines Metalls der Gruppe VIA des periodischen Systems der Elemente, wobei die Gesamtkonzentration an Oxid der Metalle der Gruppe VIII und VIA zwischen 5 und 40%, und das Gewichtsverhältnis (ausgedrückt als Metalloxide) an Metall oder Metallen der Gruppe VIII/Metall oder Metalle der Gruppe VIA zwischen 0,05 und 0,8 liegen.

5. Katalysator nach Anspruch 4, dadurch gekennzeichnet, dass das Metall der Gruppe VIA Molybdän oder Wolfram ist, die Gesamtkonzentration an Oxid der Metalle der Gruppen VIII und VIA zwischen 12 und 30% und das Gewichtsverhältnis Metall oder Metalle der Gruppe VIII/Metall oder Metalle der Gruppe VIA zwischen 0,13 und 0,5 liegen.

6. Katalysator nach einem der Ansprüche 1 bis 5, dadurch gekennzeichnet, dass die Brücken, die es gestatten, einen grossen Basisabstand zwischen den Smektitblättchen aufrechtzuerhalten, aus Aluminumoxid bestehen.

7. Katalysator nach einem der Ansprüche 1 bis 6, dadurch gekennzeichnet, dass der Gehalt an Smektit mit Blättchenstruktur zwischen 3 und 60 Gew.-% beträgt.

8. Katalysator nach einem der Ansprüche 1 bis 7, dadurch gekennzeichnet, dass der Gehalt an stabilisiertem sauren Zeolith vom Typ Y zwischen 3 und 50 Gew.-% und der Gehalt an amorpher Matrix zwischen 10 und 90 Gew.-% liegen.

9. Katalysator nach einem der Ansprüche 1 bis 8, dadurch gekennzeichnet, dass die amorphe Matrix aus Aluminiumoxid oder aus Siliziumdioxid/Aluminiumoxid mit einem Gehalt an mindestens 50 Gew.-% Aluminiumoxid besteht.

10. Verwendung eines Katalysators nach einem der Ansprüche 1 bis 9 zur Hydrocrackung von Kohlenwasserstoffchargen.

**Claims**

1. A catalyst containing by weight:

a) 1 to 70% of a bridged clay pertaining to the group of smectites, having leaves spacing maintained by inserts consisting of oxides of at least one of the following elements: boron, magnesium, aluminium, phosphorus, silicium, titanium, chromium, zirconium, molybdenum, tungsten.

b) 1 to 70% of a stabilized acid zeolite of Y type

- having a molar ratio $SiO_2/Al_2O_3$ of 8 to 70,
- whose sodium content, as determined on the zeolite roasted at 1100°C, is lower than 0.15% by weight,
- whose parameter $a_o$ elementary mesh ranges from $24.55 \times 10^{-10}$ m to $24.24 \times 10^{-10}$ m,
- whose capacity $C_{Na}$ of retaking sodium ions, expressed in grams of sodium per 100 grams of modified, neutralized and roasted zeolite, is higher than about 0.85,
- whose specific surface is higher than 400 $m^2 \times g^{-1}$,
- whose steam adsorption capacity at 25°C is higher than 6% by weight (at a P/Po ratio equal to 0.10)
- whose pore distribution comprises from 1 to 20% of pore volume contained in pores of a diameter ranging from $20 \times 10^{-10}$ m to $80 \times 10^{-10}$ m, the remainder of the pore volume being essentially contained in pores of a diameter lower than $20 \times 10^{-10}$ m.

c) 5 to 97% of an amorphous matrix consisting of free alumina of γ, η, δ or θ type or mixtures thereof or of alumina associated with at least one of the oxides of the following elements: boron, magnesium, silicium, phosphorus, calcium, titanium, vanadium, chromium, manganese, iron, gallium, yttrium, zirconium, tin, lanthanum, cerium, praseodymium, neodymium.

d) at least one metal or compound of metal selected from the group consisting of noble of non noble metals from group VIII of the periodic classification of elements, the concentration of the one or more noble metals from group VIII, expressed in weight of this or these metals, ranging from 0.01 to 5%, the concentration of the one or more non noble metals from group VIII, expressed by weight of this or these metals, ranging from 0.01 to 15%.

2. A catalyst containing by weight:

a) 1 to 70% of bridged clay pertaining to the group of smectites, whose leaves spacing is maintained by the presence of inserts consisting of oxides of at least one of the following elements: boron, magnesium, aluminium, phosphorus, silicium, titanium, chromium, zirconium, molybdenum, tungsten,

b) 1 to 70% of a stabilized acid zeolite of Y type

- having a $SiO_2/Al_2O_3$ molar ratio from 12 to 40,
- whose sodium content, as determined on the roasted zeolite at 1100°C, is lower than 0.15% by weight,
- whose parameter $a_o$ of the elementary mesh is comprised between $24.38 \times 10^{-10}$ m and $24.26 \times 10^{-10}$ m,
- whose capacity $C_{Na}$ of retaking sodium ions, expressed in grams of sodium per 100 grams of modified, neutralized and roasted zeolite, is higher than about 0.85,
- whose specific surface is higher than 550 $m^2 \times g^{-1}$;
- whose capacity of steam adsorption at 25°C (at a P/Po ratio equal to 0.10) is higher than 6% by weight,
- whose pore distribution comprises from 3 to 15% of the pore volume contained in pores of a diameter ranging from $20 \times 10^{-10}$ m to $80 \times 10^{-10}$ m, the remainder of the pore volume being contained in pores of a diameter lower than $20 \times 10^{-10}$ m.

c) 5 to 97% of an amorphous matrix consisting of free alumina of γ, η, δ and θ type or of said alumina associated with at least one of the oxides of the following elements: boron, magnesium, silicium, phosphorus, calcium, titanium, vanadium, chromium, manganese, iron, gallium, yttrium, zirconium, tin, lanthanum, cerium, praseodymium, neodymium.

d) at least one metal or compound of a metal selected from the group consisting of the noble or non noble metals from group VIII of the periodic classification of elements, the concentration of the one or more noble metals from group VIII, expressed by weight of this or these metals, ranging from 0.03 and 3%, the concentration of non noble metals or metals from group VIII, expressed by weight of this or these metals, ranging from 0.05 to 10%.

3. A catalyst according to claims 1 or 2, wherein the bridged smectite has a density of charge from 0.6 to 1.2 meq · $g^{-1}$, a specific surface from 200 to 600 $m^2 \cdot g^{-1}$, a basal spacing from 1.6 to 2.0 nm.

4. A catalyst according to one of claims 1 to 3, containing at least one compound of a metal from group VIII selected from the group consisting of cobalt and nickel, in association with at least one compound of a metal from group VIB of the periodic classification of elements, the total concentration of oxide of metals from groups VIII and VIB ranging from 5 to 40%, the ratio by weight (expressed in metal oxides) of the one or more metals from group VIII to the one or more metals from group VIB ranging from 0.05 to 0.8.

5. A catalyst according to claim 4, wherein the group VIB metals is molybdenum or tungsten, the total concentration of oxide of metals from groups VIII and VIB ranging from 12 to 30%, the ratio by weight of the one or more metals from group VIII to the one or more metals from VIB ranging from 0.13 to 0.5.

6. A catalyst according to one of claims 1 to 5, characterized in that the bridges whereby is maintained a substantial basal spacing between the smectite leaves, consist of alumina.

7. A catalyst according to one of claims 1 to 6, characterized in that the content of bridged smectite ranges from 3 to 60% by weight.

8. A catalyst according to one of claims 1 to 7, characterized in that the content of stabilized acid zeolite of Y type ranges from 3 to 50% by weight and the content of amorphous matrix ranges from 10 to 90% by weight.

9. A catalyst according to one of claims 1 to 8, characterized in that the amorphous matrix consists of alumina or a silica-alumina containing at least 50% by weight of alumina.

10. The use of a catalyst according to one of claims 1 to 9, for hydrocracking hydrocarbons charges.